# EUROPEAN PATENT SPECIFICATION

(11) **EP 2 369 709 B1**
(45) Date of publication and mention of the grant of the patent: **04.05.2016**
(21) Application number: 11168783.6
(22) Date of filing: 24.10.2005
(51) Int. Cl.: H02H 5/10, H01L 31/042, G08B 13/14, H01L 31/02

(54) **Switch-Fuse with control management for solar cells**
Lastschalter mit Sicherungen mit Steuerungsmanagement für Solarzellen
Interrupteur à fusibles avec gestion de contrôle pour cellules solaires

(43) Date of publication of application: 28.09.2011
(62) Divisional of application: 05799316.4
(73) Proprietor: Robert Bosch GmbH, 70442 Stuttgart (DE)
(72) Inventor: Richter, André, 21256 Handeloh-Wörme (DE); Leu, Sylvere, Schönenberg 8824 (CH)

(56) References cited:
- JP-A- H09 182 279
- JP-A- 2000 164 906
- US-B1- 6 650 031

## Description

The invention generally relates to solar modules and the control of such solar modules. More specifically, the invention relates to power and data management of such solar modules and the protection of such solar modules and a load connected to such solar modules against abnormalities in operation.

A solar power generator usually comprises a number of solar modules. A solar module usually comprises a plurality of solar cells. The solar modules are connected in series to form a string of solar modules. The number of solar modules connected to form such a string is limited due to the maximum voltage which can be safely handled. Today, the maximum voltage supplied by a string is usually set to 1kV. A novel regulation is expected for the European Community and probably other countries to issue soon, defining certain safety regulations for solar power generators connected to the public mains. This regulation will prescribe a safe separation of the solar generator from the mains to avoid interference.

In the following description and the attached claims, where it is not explicitly differentiated between "string" and "solar module", the term "string" is used to define a string comprising a number of solar modules or a single solar module.

Usually, a plurality of strings are connected in parallel to provide a maximum power output. Today, large scale solar power plants often provide 250kWp and are constructed with power outputs of up to 10MWp.

Such large power dimensions require an improved power management of the solar generator. One problem associated with such large scale generators is to avoid interference of the public mains connected to the solar generator in case of any malfunction of the solar generator.

A further problem associated with such solar generators comprising a plurality of strings is to avoid a damage of one solar module, solar cell or string if another solar module, solar cell or string of the generator has a malfunction. Such malfunction may result in reverse currents which may heavily negatively affect the other solar modules, cells or strings of the generator.

The detection of malfunctions, even malfunctions of only small parts of solar systems is very important because of long term guaranties. E.g. in Germany solar plants are calculated for a minimum life time of 20 years.

Today, solar generators are protected against high currents in functional and reverse direction using melting fuses, electromagnetic or bimetal elements. However, bimetal elements and electromagnetic elements are not capable to provide a safe operation as they usually are mounted close to the solar generator and thus experience large temperature changes which negatively affect their safe operation. Melting fuses usually include a remarkable electrical resistance inducing significant electrical losses thus decreasing the efficiency of the solar generator. Melting fuses usually require a current which significantly exceeds the nominal value in order to safely react and separate the lines. In photovoltaic systems it is not guaranteed, that such excessive current overload will occur - usually the overload is present in the form of only a small difference between the nominal and factual current. An example of such a solar generator is disclosed in JP 09182 779.

DE 100 02 870 A1 describes an electrical circuit to limit the current in an electrical line. The circuit comprises a vacuum switch controlled by an over-current detection logic which is coupled to the monitored electrical line. This prior art system cannot provide protection against reverse currents and thus is not suitable for use in solar generators comprising a plurality of solar cells.

A further prior art system which may be used to limit the current flowing in an electrical line is disclosed in EP 1 014 403 A1. This system is adapted to detect short circuit currents using a specific measuring and analyzing unit. However, this prior art system again does not provide any protection against reverse currents and thus is not suited to be used in solar generators comprising more than one solar module.

EP 1 538 645 A1 discloses another electrical circuit for disrupting an electrical line the circuit being improved to decrease the electrical arc occurring in mechanical switches when they are opened or closed in high-voltage systems. The such disclosed prior art system has a number of drawbacks. The system comprises electrical components connected in series to the power line effecting significant losses. Further, the system is not adapted to react in cases of reverse currents.

Another emerging problem associated with solar generators is the matter of theft protection. Solar generators may be installed in places which are not supervised and this may attract thieves to steal single solar modules, strings or a number thereof.

JP 200 2367 046 A describes an anti-theft device for a solar battery module comprising a cable for loop formation and an alarm control board connected with this loop. This system has the drawback that an additional circuit is required to provide theft protection. A further drawback lies in the fact, that the cable forming the loop may be bridged before interrupting it and thus a thief may overcome this system when being aware of its presence.

WO 2004/090993 A2 discloses another method to protect a photovoltaic panel against theft. This prior art system has the drawback, that it is associated to a single string of solar modules and is able to detect the disconnection of this string. However, it is not possible to detect the disconnection of a single solar module from a string of modules. Further, the system is unsafe with regard to possible attempts to replace the stolen solar cell with a battery or the like. A further drawback of this prior art system is that a distinct analysis of a string of solar cells is only possible using a complex op-analysis with an oscillating signal when the string is disconnected from the electricity network. However, it is undesirable to repeatedly disconnect the solar generator from the public mains for the purpose of theft protection.

Another problem associated in particular with large scale solar generators is the monitoring and controlling of the single strings forming the generator. It is necessary, for the purpose of maintenance and for providing a power output of the solar generator adapted to the actual need to provide an individual control of the strings and to achieve information about any malfunction in one of the strings.

A further important problem associated with the assembling of strings is the danger of reverse connection of strings which might occur in the course of initial installation, maintenance or replacement of a string. This may largely affect the function of the whole system as a string which is reverse connected may damage other strings of the generator.

The invention aims at providing a connection technique and circuit for solar generators which overcomes one or more of the above-referenced problems. In particular, the invention aims at providing a circuit which is capable to safely avoid any damage to the connected string itself resulting from any external interference as well as to other strings which are connected to this string. Finally, the invention aims at providing a circuit which is capable to safely avoid any negative effects in the public mains connected to a solar power generator due to malfunction of this solar power generator.

According to the invention as recited in claim 1 and 15 an electrical circuit arrangement is provided for controlling the output of at least one first string, the electrical circuit arrangement comprising:
- a first mechanical switch to selectively interrupt one of the connecting lines of the first string,
- a measuring device for measuring the voltage across the first string and/or the current flowing through the first string, and
- a controller receiving a signal from the measuring device and controlling the first mechanical switch,
wherein the controller is adapted to open the first mechanical switch if the voltage and/or the current is not within a predetermined range.

The invention provides an arrangement, wherein an advanced monitoring of a string is achieved and thus an improved control of the string can be carried out. The controller according to the invention is capable to handle malfunction of the string which may result in a voltage or current lying outside of the usual range of values supplied by the string. By this, the system is capable to provide safety against excessive currents as well as reverse currents.

The mechanical switch may preferably be a relay. The measurement of the current may be performed via a shunt or as magnetic flux measurement. The voltage measurement may take place before and/or behind the mechanical switch or shunt.

A first preferred embodiment comprises a second mechanical switch in the other of the connecting lines of the string, wherein the controller is adapted to simultaneously control the first and second mechanical switch. This allows a complete disconnection of the string from the public mains and the remaining strings of the solar generator in case of any malfunction.

Alternatively to the first preferred embodiment it may be advantageous in certain applications to provide a second mechanical switch in the other of the connecting lines of the string, wherein the controller is adapted to sequentialy actuate the first and second mechanical switch shifted for a short time interval to reduce peak power. Typically one might actuate the second switch 50ms after the first mechanical switch to reduce peak power of the involved logic components.

In particular, it is preferred to sequentially actuate alls switches of an electrical circuit according to the invention or of a solar power plant comprising a plurality of such electrical circuits with a short delay of preferably 50ms.

In an important preferred embodiment the limits of the predetermined range are programmable. This programming may take place in the controller itself or in a central power and data management control. It is a permanent problem of prior art technique that the safety limits have to be adapted to the specific individual properties of the individual solar generator arrangement which is installed. In the course of this, the maximum voltage limit must usually be set to the open-circuit voltage to protect the inverter from undue voltage. However this voltage limit will decrease significantly in actual operation of the solar generator and will usually only be reached at low temperature condition. Thus, according to the prior art, only a lower number of solar modules could be connected to an inverter having such a predetermined upper voltage limit than the inverter could handle at normal operation conditions. Using a programmable upper voltage limit will allow a safe protection of the inverter and a much easier dimensioning of the components of the solar generator. In case of overvoltage the respective strings may be separated by opening the switches or single solar modules out of this string may be separated and bridged to reduce the voltage to an acceptable level.

Further, in case of reverse connection, the output voltage may be doubled due to serial connection of the solar modules. Thus, if protection against reverse connection only should be provided, the maximum voltage limit may be Increased respectively.

Finally, programming the limits for the allowable currents provides the advantages, that the short cut current limits which are largely dependent from the incoming radiation may be programmed depending on the actual radiation. This will allow to provide a sensitive short cut protection in cases of high or low radiation. A further advantage is the easy adjustment of the controller to various types of solar modules. The reverse current allowable for a solar module depends on the type of module, e.g. polycrystalline solar modules may carry a reverse current which is round 4-times higher than solar modules based on thin film technique. The circuit arrangement according to the invention may thus easily be adapted to different solar generators by programming the limits or may be re-programmed if single or all solar modules of the generator are replaced with new solar modules having a different technology.

Having programmable limits it is further preferred that the controller is adapted to program the limits using a real-time software programming, a predetermined firmware programming or a hardware programming using programmable hardware plugs or removable electronic components like hardware bridges, hardware switches or resistors. The limits may either be programmed when dimensioning the solar generator, which may easily be achieved using hardware or software programming. Further, it may be required to change the limits due to later modifications of the solar generator which may be achieved using hardware or software programming, too. Finally, it is advantageous for various purposes to permanently adapt the limits to current operation conditions, e.g. temperature, irradiation. This may be done in realtime using software programming of the limits only.

It is further referred, that the controller comprises a direct switch to actuate the mechanical switch. Usually, the controller is installed adjacent to the solar modules. In case of maintenance it is often preferred to manually deactivate or activate the mechanical switch in the connecting line. For this purpose a direct switch is preferably installed at the controller. This will allow to safely disconnect a solar module for maintenance or in case of a defect which is of particular importance if the mechanical switches may be controlled from a distance. The direct switch will override this distance-control actuation in particular for off condition.

It is further preferred, that the measuring device is arranged to measure the current via a shunt at low impedance. By this, a precise measuring without significant electrical losses is achieved.

It is further preferred, that the measuring device is arranged to directly measure the output voltage of the string, i.e. to measure the voltage across the connecting lines between the string and the mechanical switch. This allows to directly detect any excessive voltage or reverse connection of the string.

To this extent it is preferred, that the controller is adapted to open the mechanical switch if the direct output voltage exceeds a certain limit or the solar module is reverse-connected. Thus, the mechanical switch will be opened immediately in case of such malfunction or will not be closed if already open.

According to a further preferred embodiment, the measuring device is adapted to measure the output voltage of the electric circuit including the string and the mechanical switch, i.e. the voltage across the connecting lines between the mechanical switch and an inverter. This may be achieved by providing an additional measuring device and will allow to detect a short circuit of the power output lines, in particular a common bus-bar used to connect a plurality of strings and thus will allow to protect the string against any negative influence coming from the output side as well as vice versa even in case that the mechanical switch is in open position. This feature enables also a bus bar fusing in conjunction with the communication to all other controls to switch all strings off.

According to the invention it is particularly preferred that string comprises at least two solar modules connected. As discussed above, the invention is particularly well-suited for large scale solar generators.

It is further preferred, that the controller is adapted to output a status signal signalizing at least one of the operational characteristics like output voltage or current of the string. This will allow to monitor the status of the string from a distance to achieve a safe operation of large scale solar generators comprising a plurality of such strings.

A further preferred embodiment of the invention comprises a plurality of solar strings and a central power and data management device connected to the controller of each of the strings for managing the power and data of the strings. This central power and data management device will allow to receive detailed information about the function or malfunction of single strings of the solar generator and thus will allow to optimize maintenance and replacement of defect solar modules in large scale generators. Further, this feature will also enables easy connection of monitoring systems.

Preferably, a direct switch of the central power and management control device to actuate the mechanical switches of a number of strings. This will provide the advantages as discussed above for a number of strings for the purpose of maintenance.

In another preferred embodiment the measuring device is adapted to measure the voltage of one or both of each of the connecting lines versus ground. This will improve the circuit arrangement in order to detect any ground loop occurring in the system and to allow to take the necessary steps when such ground loop is detected. It is preferred that the voltage of both connecting lines is measured versus ground so that any ground loops occurring on any side will be detected.

Another important preferred embodiment of the invention is characterized by a semiconductor switch arranged to shortcut the connecting lines of the string between the mechanical switch and the inverter and further characterized by a control device adapted to close the semiconductor switch for the time period of opening or closing of the mechanical switch. A constant problem associated with mechanical switches used in high voltage circuits is the occurrence of an arc during opening and closing of the switch. This arc will induce an erosion process at each time of an opening or closing of the switch. The magnitude of erosion will depend on the current flowing via the arc. A plurality of such erosion processes will damage the contacts of the switch significantly and may result in failure of the switch. Further, the arc effects a temperature increase and thus implies the risk of thermal damage or even inflammation of the switch. The preferred embodiment overcomes these drawbacks in that during the process of opening or closing of the switch a semiconductor switch is closed which shortcuts the connecting lines of the string. Consequently the mechanical switch can be opened or closed at low current without the occurrence of a significant arc.

The semiconductor switch may preferably be arranged between the connecting lines of the string itself or between the lines of a common bus-bar coupling a plurality of such strings. Shortcutting a string does not negatively effect the string or another string coupled with this string because of the characteristic of solar modules having a limited shortcut current and experiencing no damage when operated in short circuit. The use of such a semiconductor switch provides improved characteristics if the mechanical switch is opened in a system comprising a plurality of strings as the reverse current resulting from the sum of the other strings will, mainly contribute to otherwise damage the mechanical switch by exceeding the maximum power to be switched.

According to the invention the controller is adapted to provided a theft control for a string connected to the circuit arrangement, the theft control comprising:
- a control unit to measure the current flowing through at least one of the connecting lines with the mechanical switch in closed position,
- a logic unit detecting a sudden change of this current and outputting a signal to an alarm unit to signalise the disconnection of the string.

As the risk of theft increases, efforts have to be made to protect solar modules against this. This may be achieved with a certain degree of protection by mechanical devices which aim at complicating the dismantlement of solar modules. Further, specific electrical theft protection arrangements are known which induce additional costs. The theft protection according to the invention overcomes the drawbacks of prior art theft protection systems as a simple but safe control of the current is performed which may easily detect any irregular sudden change of this current induced by cutting a line or trying to provide a replacement generator in place of the solar module which is tried to be stolen. The theft protection may easily be integrated into the controller controlling the mechanical switch or a central power and data management and thus may be included in the circuit arrangement for controlling the solar module or the string without significant additional costs.

The theft protection is further improved by a pulse generator coupled to the connecting lines to send check pulses into the connecting lines with the mechanical switch in open position or in case current produced by the string is not sufficient for the protection, a measurement unit adapted to measure the resistance of the string during a check pulse, and a logic unit adapted to detect a change of this resistance and to output a signal to an alarm unit to signalise the disconnection of the string. This will allow to provide theft protection even at night, when no current produced by the solar module is flowing through the connecting lines or if the mechanical switch is in open position. The pulses may be sent at predetermined time intervals to permanently provide theft protection or may be manually induced by a person supervising the solar generator. Again, the pulse generator and the measurement unit may be integrated into the controller controlling the mechanical switch and thus may be included in the circuit arrangement without significant additional costs. An important advantage of this theft protection lies in the fact that even the removal of one single solar module from a string of solar modules may be detected as this will induce a change of resistance detectable by the logic unit.

In a further preferred embodiment the controller comprises:
- an analogue basic control unit to open the mechanical switch in case of excessive or reverse current in the connecting line or reverse connection of the solar module, and
- an advanced digital control unit (90) to provide advanced control characteristics.

The basic control unit may be a simplified direct acting circuitry for enabling the protection against major system malfunction as induced by reverse connection, overcurrent or reverse current. To enhance safety, the basic control unit is operated independently from the advanced digital control unit

The advanced control unit may be integrated in the power and data management control discussed above. It may comprise a microcontroller to provide and control information about the status of the string or module and to control the operation of the module in the normal operation mode. The microcontroller may additionally control the opening of the mechanical switch if the voltage of the string is too low, provide the logical steps required for the theft protection function, include programmable thresholds of the current and/or voltage to define malfunction of the string or the corresponding programmable magnitudes of change for theft protection and may finally provide the general control of the string and process the measured values. The microcontroller is an optional feature and without the microcontroller or in case of failure of the microcontroller an operation of the solar generator is possible with basic functionality. This will enhance the safety of operation.

According to the above arrangement, the advanced digital control unit is preferably adapted
- to provide a status signal signalizing at least one of the operational characteristics of the string,
- to provide a programmable break limit to the basic control unit,
- to open the mechanical switch if the voltage output of the string is below a preferably programmable lower voltage limit,
- to open the mechanical switch during night time,
- to open the mechanical switch In case of certain weather conditions like thunderstorm, and/or
- to provide the theft control as discussed above.

The circuit arrangement according to the invention may be further improved by a dc-insulating device coupled to the controller to transfer the data from the controller to a central power and data management control and/or to a controller of another string. This will decouple the data transfer from any adverse influence resulting from the power transfer of the generator and will improve operational safety of the whole generator. Further, the risk of damage to the controller, the central power and data management and the other controllers is decreased for times of any malfunction of one single string.

It is further preferred that the controller is connected via a common data bus to a central power and data management control and or to other controllers of a solar generator, the common data bus preferably comprising a first set of lines for data transfer, at least one second line for direct transfer of predetermined signals of primary relevance like a signal for opening of all mechanical switches (so called "clearing") or a signal for signalizing an alarm status.

The at least one second line may preferably be directly connected to the controller to directly effect an actuation of the mechanical switches or to directly receive an alarm signal from the controller. This will establish a second security level for the whole generator, the level being independent from the data transfer lines of the bus.

Finally it is preferred to provide a temperature sensor and/or a radiation sensor coupled to the controller to detect the temperature of the solar modules of the string and the incoming radiation, respectively. This will allow to detect a beginning malfunction and or critical operation conditions e.g. due to ageing or a local defect of a solar module or due to critical weather conditions, indicated by an increase or decrease of temperature and/or incoming radiation and thus allow to guard against complete failure of the module or even the whole string by separating single modules or strings from the inverter.

The temperature and/or radiation sensor is in particular preferable in combination with programmable range limits vor the allowable voltage and current values. Providing the sensors and the programming option it is possible to define a specific maximum voltage limit depending on the actual temperature and/or to program a specific maximum current limit depending on the actual irradiation. This will provide a safe operation of the inverter and an improved efficiency of the whole solar generator.

Another aspect of the invention is a photovoltaic power supply arrangement, comprising a plurality of strings wherein each of the strings comprises a number of solar modules connected in series and the strings are connected in parallel via a common bus bar connected to an inverter, characterized in that each of the strings comprises a circuit arrangement according to any of the preceding claims. As discussed above, the circuit arrangement according to the invention is in particular advantageous in large scale solar generators to provide improved control mechanisms and to allow exact monitoring and quick and cost-effective management of the single strings of the whole generator.

It may be preferable in certain applications to provide a single central power and data management control to control a plurality of strings. This will decrease installation and operation costs.

The photovoltaic power supply arrangement may be further improved by providing a central over-voltage and lightning protection arranged between the common bus-bar and the inverter. By this, the sensitive electronic of the inverter is protected against damage resulting from over-voltage and lightning events in the solar modules.

As discussed above, the arrangement may comprise a semiconductor switch arranged to shortcut the two lines of the common bus bar and a control device adapted to close the semiconductor switch for the time period of opening or closing of the mechanical switch. This will avoid any reverse current flowing from the other strings of the generator to the mechanical switch of one particular string which is opened or closed and thus avoid damage to this mechanical switch due to electrical events.

Whereas it is preferred that each of the strings is controlled by a separate circuit arrangement, it may be preferable in certain applications to provide one single circuit arrangement controlling a plurality of strings. This will reduce costs of the solar generator as a whole. Further, the improved logics of the electrical circuit according to the invention allows for safe theft protection even in such cases of a control of a plurality of strings by only one single circuit arrangement. In such cases, the electrical circuit may be split up in such a way that a mechanical switch is provided for each of the strings, whereas a central, single controller is provided to control the plurality of mechanical switches.

It is further preferred that the data of each circuit arrangement is provided to a central power and data management control and preferably to any other circuit arrangements. This will allow to selectively open or close the mechanical switches of the single strings to adapt the performance of the solar generator to present operation requirements. The central power and data management may be used to switch off certain strings or modules for maintenance and to detect any malfunction of single strings.

It is preferred, that the data is provided to the central power and data management control via a dc-insulating device. The advantage of such a decoupling device is discussed above with reference to the circuit arrangement.

Yet another aspect of the invention is a connection housing for connecting a string to a common bus bar, wherein the connecting housing sealingly encases at least one circuit arrangement as discussed above. High dc-currents as generated in solar generators tend to induce significant corrosion of contact points in case of the presence of humidity in the environment of the contacts. Thus, it is preferred to encase the circuit arrangement in a sealed housing to avoid any access of humidity and to thus prevent corrosion of the contacts.

A further aspect of the invention is the use of the circuit arrangement discussed above for controlling the current flow of a string, for providing a theft protection of a string or for providing a central power and data management of a string. An important advantage of the circuit arrangement is its specific suitability for solar generators and the possibility to provide a number of functions required in such solar generators. The circuit arrangement may provide only one of these functions, as described above, but preferably it is used to provide a plurality of functions which may be integrated in the controller and thus be performed without significant additional costs.

Finally, a further aspect of the invention is a method according to claim 15. The method is in particular well-suited to be performed using a circuit arrangement according to the invention or a photovoltaic power supply arrangement according to the invention.

With regard to specific details and advantages of the method according to the invention and its preferred embodiments it is referred to the corresponding description of the respective features of the circuit arrangement and photovoltaic power supply arrangement according to the invention which are preferable used for executing the inventive method.

In an important embodiment of the method according to the invention, the over voltage level is monitored in real-time to open at least one mechanical switch in case of overvoltage to allow to set the magnitude of the nominal output voltage of the strings with a smaller safety margin to the maximum nominal input voltage of the inverter connected to the strings. According to prior art techniques, the nominal output voltage of all strings r modules of a solar generator has to be set far below the nominal input voltage of an inverter in order to keep safety in the rare cases of overvoltage due to extremely low environmental temperatures. This leads to ineffective dimensioning and thus increasing operational costs. The preferred embodiment overcomes this problem as it allows to select an inverter-which nominal input voltage is close to or even equal to the nominal output voltage of all solar modules connected to it. This is achieved because it is possible to selectively disconnect single solar modules or strings in the rare cases of over-voltage.

The invention will be fully understood when reading the following details description of preferred embodiments in connection with the accompanying figures.

### BRIEF DESCRIPTION OF THE FIGURES

Fig. 1 is a schematic circuit diagram of a preferred embodiment of the circuit arrangement according to the invention,
Fig. 2 is a schematic diagram of a solar panel forming a string comprising three solar module units,
Fig. 3 is a schematic diagram of a string of two solar panels connected in series,
Fig. 4 is a schematic diagram of two strings connected in parallel,
Fig. 5 is a schematic diagram of three strings connected to a generator connection housing,
Fig. 6 is a schematic diagram of three blocks according to Fig. 5 configured to form a photovoltaic power generator,
Fig. 7 is a schematic diagram of two modules according to Fig. 6 forming a large scale photovoltaic power,
Fig. 8 is a schematic diagram of two or more circuits according to the invention forming a wired OR for an alarm signal for a plurality of strings,
Fig. 9 is schematic diagram according to Fig.8 provided for a signal actuating the mechanical switches of a plurality of strings,
Fig. 10 is schematic diagram of a first wiring scheme of a plurality of strings,
Fig. 11 is schematic diagram of a second wiring scheme of a plurality of strings,
Fig. 12 is schematic diagram of a third wiring scheme of a plurality of strings,
Fig. 13 is schematic diagram of a controller comprising a basic control unit and an advanced control unit,

### DETAILED DESCRIPTION OF THE DRAWINGS

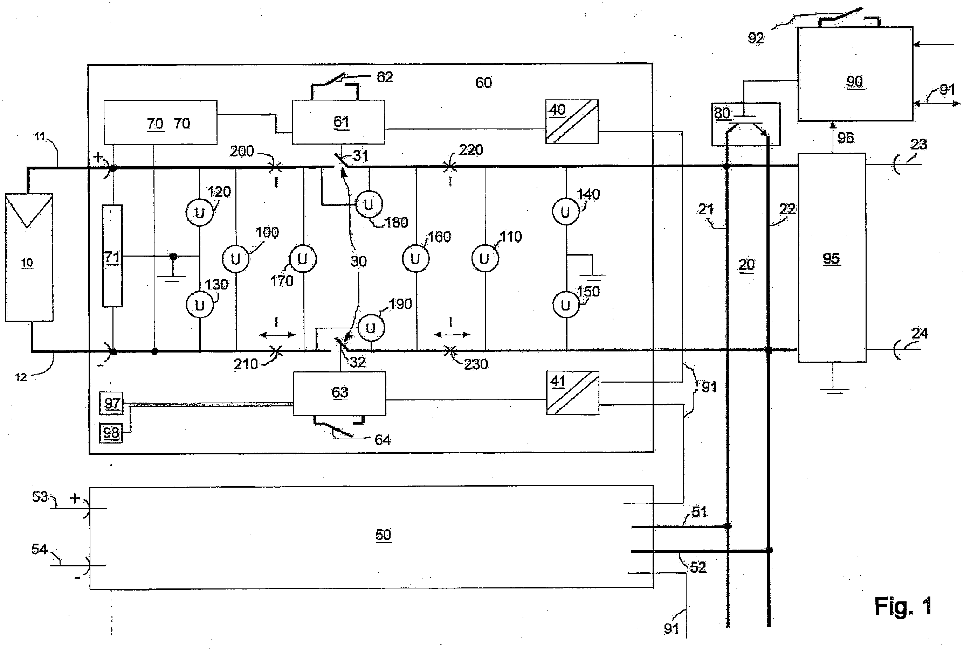

In Fig. 1 a photovoltaic power generator element 10 which may comprise a solar module or a plurality of solar modules connected in series to form a string and/or a plurality of modules or strings connected in parallel is connected via a positive connecting line 11 and a negative connecting line 12 with a common bus bar 20 comprising a positive bus line 21 and a negative bus line 22.

A mechanical switch 30 is arranged to selectively interrupt or provide a connection of the photovoltaic power generator via the connecting lines 11,12 to the common bus bar 20. The mechanical switch comprises two switches 31,32, the former being arranged to selectively interrupt the positive connecting line 21 and the latter being arranged to selectively interrupt the negative connecting line 22. The mechanical switch may be an electromagnetically actuated relay with one or two contacts or may alternatively be a bi-polar semiconductor switch.

A first voltmeter 100 is arranged between the mechanical switch 30 and the photovoltaic power generator element 10. The first voltmeter 100 is adapted to measure the voltage across the positive and negative connecting lines. With the mechanical switch in the closed position the voltmeter 100 will measure the voltage across the positive and negative common bus line, i.e. the voltage produced in total by all photovoltaic power generator elements connected to the common bus bar 20. With the mechanical switch in the open position the first voltmeter 100 will measure the voltage provided by the photovoltaic power generator element 10.

A second voltmeter 110 is arranged between the mechanical switch 30 and the common bus bar 20 to measure the voltage across the positive and negative connecting lines 11,12. With the mechanical switch in the closed position the second voltmeter 110 will measure the same nominal voltage as the first voltmeter 100 excluding the switch losses. The switch losses can be analysed for switch quality monitoring. With the mechanical switch 30 in the open position the second voltmeter 110 will measure the voltage in the common bus bar, i.e. the voltage produced by those solar modules connected to the common bus bar except the solar generator element 10.

Further, a third and fourth voltmeter 120,130 is arranged between the mechanical switch 30 and the solar generator element 10 to measure the voltage of the positive and negative connecting lines versus ground, respectively. In the same way, a fifth and sixth voltmeter 140,150 is arranged adjacent to the second voltmeter 110 to measure the voltage of the positive and negative connecting lines versus ground, respectively, between the mechanical switch 30 and the common bus bar 20.

A first and second current meter 200, 210 is arranged to measure the current in the positive and negative connecting lines, respectively, between the solar module 10 and the mechanical switch 30.

A third and fourth current meter 220,230 is arranged to measure the current in the positive and negative connecting lines, respectively, between the mechanical switch 30 and the common bus bar 20.

A seventh and eighth voltmeter 160, 170 are arranged adjacent to the voltmeters 110, 100, respectively. The voltmeters 160, 170 allow to precisily measure the voltage and to determine the measurement error induced by the resistance of the current meters. The data acquired by the voltmeters 100-160 and the current meters 200-230 are transferred via a dc-insulating device 40,41 to a controller 60,61.

Finally, voltmeters 180, 190 are provided to directly measure the voltage drop across the switches 31, 32.

The controller 60 comprises two control units 61, 63 to monitor the voltages and currents measured by the voltmeters 100-190 and the current meters 200-230. The control units 61, 63 directly control the actuation of the mechanical switches 31, 32 in order to open the switches in case of any irregularities shown by the measured values.

A central power and data management control 90 is connected with the control 60, 61 to receive information about the voltages and currents measured by the voltmeters 100-190 and the current meters 200-230 and about the actuation and status of the mechanical switch 30:

A direct switch 62 connected to the control unit 61 may be activated manually to open the switch 31. In the same way, a direct switch 64 connected to the control unit 63 may be activated manually to open the switch 32. These direct switches allow to directly activate the switches 31, 32 in case of maintenance of the solar generator element 10 to provide save separation of the solar generator element from the common bus bar 20.

Additionally, a direct switch 92 connected to the central power and management control 90 may be activated manually to open the switch 31, 32 and the switches of any other strings connected to the common bus bar 20. The direct switches 62, 64, 92 overrule any actuation command of the control units 61, 63 and the central power and management control 90.

A theft detection unit 70 is connected to the positive and negative connecting line 11,12 between the solar generator 10 and the mechanical switch 30 to send a pulse signal through the solar element with the mechanical switch 30 in open or closed position. In the preferred embodiment the analysis of this pulse signal is performed by the installed voltmeters and current meters and the controller 60 but it is alternatively possible to use the theft detection unit 70 itself for this purpose or to analyze the pulse signal in the central power and data management control 90. Element 71 prevents the string of floating and generation of high voltages induced by autocharging of the string itself.

A temperature sensor 97 and an irradiation sensor 98 is provided for measuring the environmental temperature and the irradiation in the vicinity of the solar modules. The temperature and irradiation values measured by the respective sensors are transmitted to the controller 63.

The common bus bar 20 is connected to a semiconductor switch 80 which is arranged to temporarily short-cut the positive and negative common bus lines 21,22. The semiconductor switch 80 is controlled by the power and data management control 90. The power and data management control 90 is connected via a wide area data bus 91 with the controller 60, 61, 63 and any other controller of additional strings 50 connected to the common bus bar 20.

An additional string, represented schematically by reference number 50 is coupled via connecting lines 51,52 to the common bus bar 20. The string 50 is connected in parallel to the string formed by the solar generator element 10.

Finally, a common over-voltage and lightning protection unit 95 is provided, which is arranged to selectively separate the output connecting lines 23,24 connecting the common bus bar 20 with an inverter (not shown). A temperature sensing element integrated in the over-voltage and lightning protection unit 95 reports via a data line 96 to the central power and data management control 90 for monitoring the quality and rest of lifetime of the surge protection element. With this information replacement can be made before failure of this element.

The preferred embodiment shown in Fig. 1 works as follows:
In case the controller 60, 61, 63 detects a sudden change of any voltage or current measured by the voltmeters and current meters, which change may result from a malfunction of a solar module of the solar generator element or any other component or from any shortcut within the circuit, the mechanical switch 30 is actuated immediately to open the switches 31,32.

Short before opening of the mechanical switch 30, the power and data management unit 90 actuates the semiconductor switch 80 to shortcut the common bus bar 20. Thus, the current which may induce an arc when opening the switch 30 is reduced to the current produced by the solar generator element 10. Immediately after the mechanical switch 30 has reached its open position the semiconductor switch 80 is opened again.

The measured voltage and current values are transferred to the controller and to the central power and data management unit 90 to analyze the reason for failure and to take the necessary steps to overcome the problem. As soon as the problem is automatically or manually analyzed to be of minor relevance or the steps to overcome the problem are finalized, the controller or the power and data management control actuates the mechanical switch 30 to close the switches 31, 32 so that the solar generator element 10 is connected with the common bus bar 20 again. In the same way as before, the semiconductor switch 80 is closed shortly before closing the mechanical switch 30 and opened immediately after the mechanical switch 30 has reached its closed position.

At night time or in times of maintenance or if the output of the solar module 10 is below a minimum voltage the controller 50 sends a signal to the pole control units 60,61 to open the mechanical switch 30 to improve safety conditions and to reduce power consumption of the switch driver.

If the mechanical switch 30 is in open position or in case that the current flowing through the connecting lines 11,12 is not sufficient to provide a theft detection when using this current, the theft detection unit 70 sends a pulse signal in time intervals of e.g. one minute to the connecting lines 11,12. A high impedance measurement of the resistance of the solar generator element 10 is performed via the resistor 71 and a sudden change of this resistance will signalize the removal of the solar generator element 10.

The temperature sensing element (98) reports to the controller 96 for lifetime monitoring of the surge protection.

An irradiation 97 and temperature 98 sensing element transfers the actual environmental values in the data bus 91 or wide area data bus 91.

A dedicated voltage meter 180 or 190 across each switch is used for switch quality monitoring.

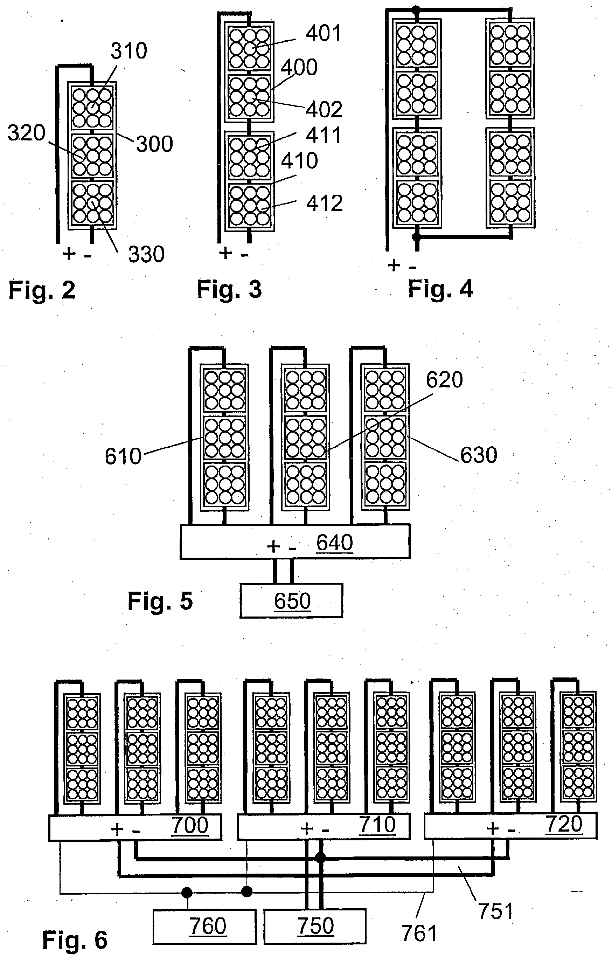

Fig. 2 shows a solar module 300 comprising three solar elements 310, 320, 330. The solar elements 310-330 are connected in series.

Fig. 3 shows two solar modules 400,410. Each of the modules 400, 410 comprises two solar elements 401, 402 and 411, 412 respectively. The solar modules 400,410 are connected in series to form a string.

Fig. 4 shows two strings according to Fig. 3 which are connected in parallel.

Fig. 5 shows three strings 610,620,630 each comprising three solar modules. The solar modules of each string are connected in series. The strings are connected in parallel using a connecting housing 640 which is hermetically sealed against humidity. The connecting housing 640 provides the sum of the current of the three strings 610-630 to an inverter 650.

Fig. 6 shows an arrangement of three connecting housings 700-720 according to Fig. 5, each of them connecting three strings of solar modules.

The sum current of each of the connecting housings is supplied to a common bus bar 751 connected to an inverter 750. Additionally, each of the connecting housings is connected via a data line with a wide area data bus 761 to supply the data of each of the strings to a central power and data management unit 760.

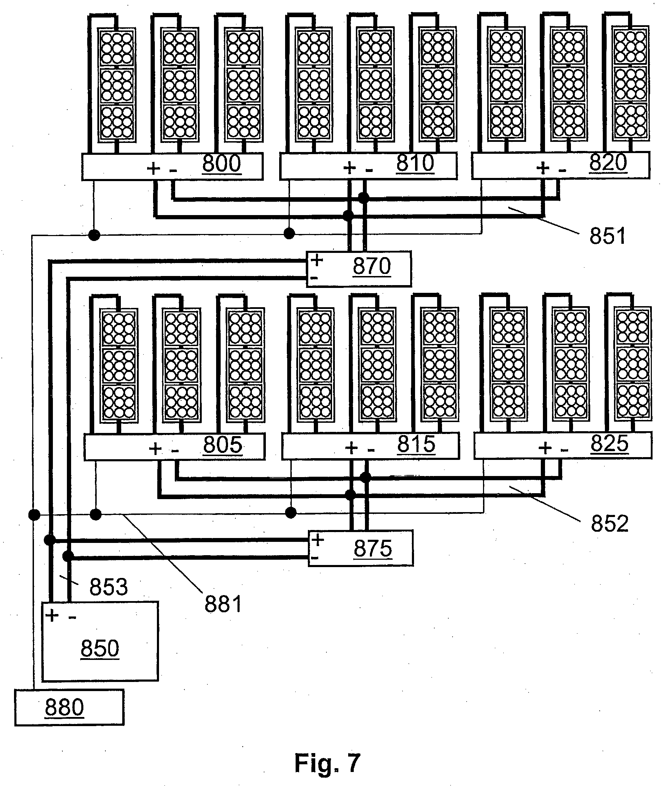

Fig. 7 shows an arrangement example of a total of 18 strings. Each three of these strings are connected via a connecting housing 800-825 and each three of these connecting housings form an arrangement according to Fig. 6, so that two arrangements according to Fig. 6 are shown in Fig. 7.

The common bus bar 851, 852 of each of the two arrangements shown in Fig. 7 is connected to a connection box 870, 875 collecting the current of three connecting housings, i.e. a total of nine strings. The two connection boxes are connected to an upper bus bar providing the sum current of the two connection boxes to an inverter 850. Additionally, a wide area data bus 881 is provided which is connected with each of the connecting housings and supplies the data acquired for each of the strings to a central power and data management unit 880.

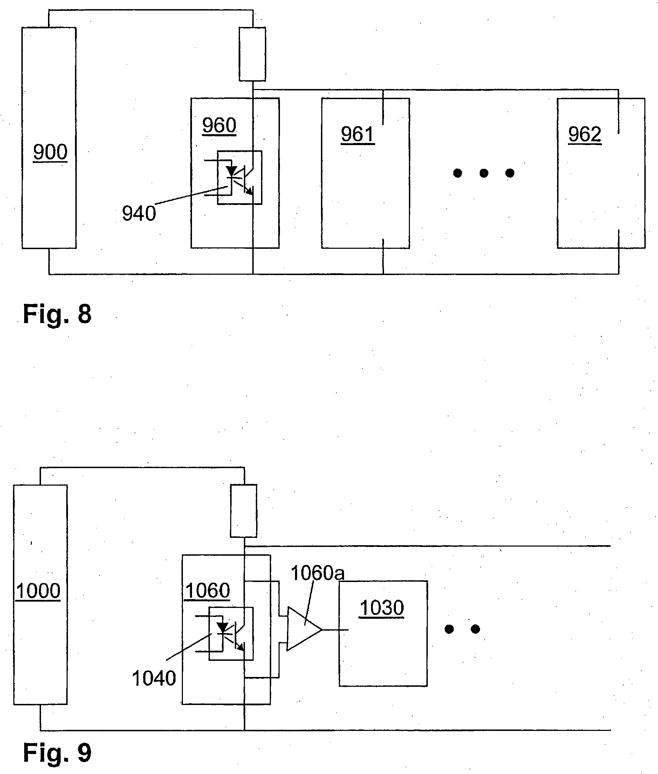

Turning to Fig. 8 three or more circuits 960, 961,...962 corresponding to the controller 60 of Fig. 1 are shown. Each of the circuits include an optical coupling device 940 corresponding to the dc-insulating device 40, 41 of Fig. 1. The circuits are power supplied by a common power supply 900. The circuits are connected to form a wired OR so that an alarm signal induced by a single circuit will provide this signal to all other circuits and thus set these circuits in alarm mode, too.

Fig. 9 is schematic diagram showing a wiring scheme similar to Fig.8. The output lines of an optical coupling device 1040 of each controller 1060 are connected to a comparator 1030. The output of the comparator 1060a is connected with a mechanical switch 1030 corresponding to the switches 31,32 of Fig. 1. A common power supply 1000 supplies all controllers 1060. In case that the power supply breaks down, the mechanical switch is actuated to open. Alternatively, a logical actuation may be initiated via the optical coupling device 1040.

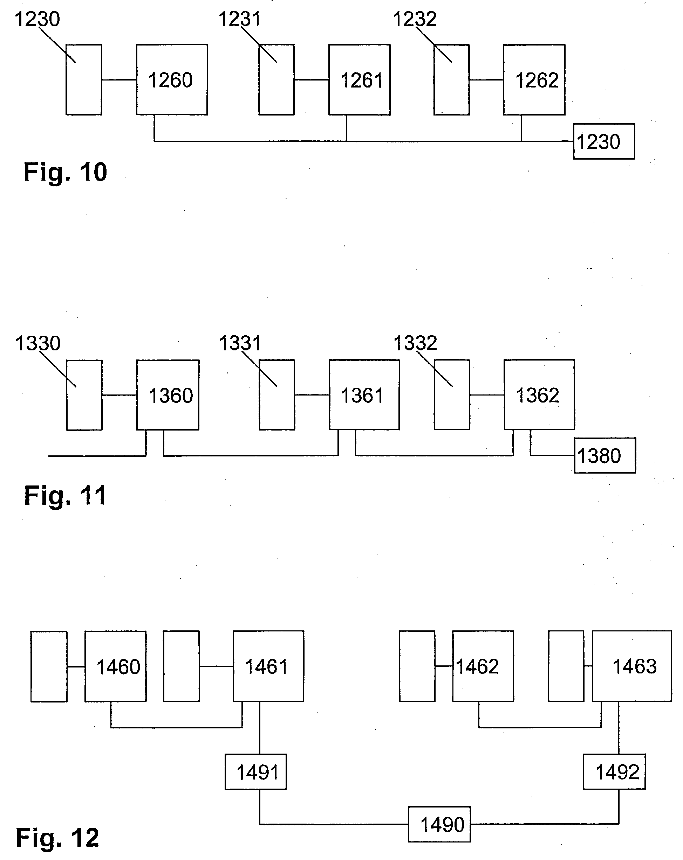

According to Fig. 10, a number of controllers 1260, 1261, 1262 are connected to a central power and data management control 1290 via a parallel wiring scheme. Each of the controllers 1260-1262 is connected to a mechanical switch 1230-1232, respectively.

According to Fig. 11, a number of controllers 1360, 1361, 1362 are connected to a central power and data management control 1390 via a loop-through wiring scheme. Each of the controllers 1360-1362 is connected to a mechanical switch 1330-1332, respectively.

Fig. 12 shows a schematic diagram of another wiring scheme for a plurality of strings. Two controllers 1460, 1461 are connected to an intermediate power and data management control 1491 via a loop-through wiring scheme. In the same way, two controllers 1462, 1463 are connected to an intermediate power and data management control 1492. The intermediate power and data management controls 1491, 1492 are connected in parallel to a central power and data management control 1490

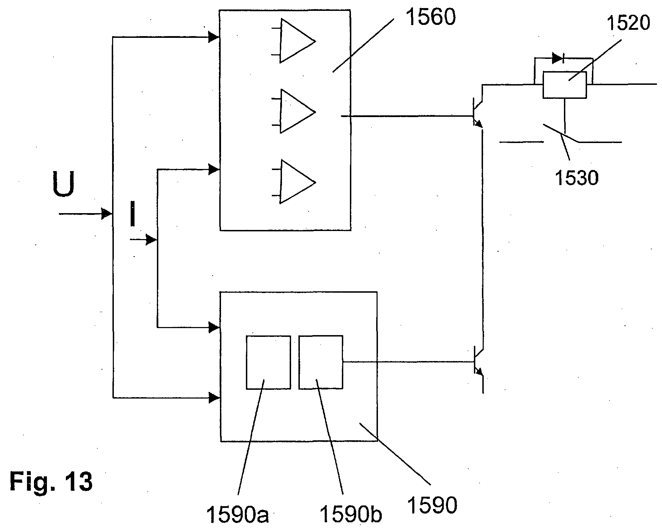

Fig. 13 is schematic diagram of a controller comprising a basic control unit 1560 and an advanced control unit 1590. The basic control unit comprises a number of comparators 1560a-c having adjustable limits. The advanced control unit comprises an analog-digital converter 1590a and a microcontroller 1590b having programmable limits. Both the basic and the advanced control unit are provided with the measured voltage and current values. The outputs of the basic and advanced control units are connected via two transistors in such a way so that both control units may independently effect an actuation of a mechanical switch 1530 via a relay 1520.

## Claims

1. Electrical circuit arrangement for controlling the output of at least one first string (10), comprising:
- a first mechanical switch (30, 31; 32) to selectively interrupt one (11) of the connecting lines (11, 12) of the first string,
- a measuring device (100-190; 200-230) for measuring the voltage across the first string and/or the current flowing through the first string, and
- a controller (60, 61, 63) receiving a signal from the measuring device and controlling the first mechanical switch
wherein the controller is adapted to open the first mechanical switch if the voltage and/or the current is not within a predetermined range
**characterized in that** the controller (60) is adapted to provide a theft control for a string connected to the circuit arrangement, the theft control comprising:
- a control unit to measure the current flowing through at least one of the connecting lines with the mechanical switch in closed position,
- a logic unit detecting a sudden change of this current and outputting a signal to an alarm unit to signalise the disconnection of the string or a single solar module of the string
- a pulse generator (70) coupled to the connecting lines to send check pulses into the connecting lines,
- a measurement unit adapted to measure the resistance of the string during a check pulse, and
wherein the logic unit is adapted to detect a change of this resistance and to output an alarm signal to an alarm unit to signalise the disconnection of the string or a single solar module.

2. Circuit arrangement according to claim 1,
further comprising a second mechanical switch (32) in the other (12) of the connecting lines of the first string, wherein the controller is adapted to sequentially actuate the first (31) and second (32) mechanical switch shifted for a short time interval to reduce peak power.

3. Circuit arrangement according to any of the preceding claims,
wherein the measuring device (110) is arranged to measure the output voltage of the electric circuit including the string and the mechanical switch.

4. Circuit arrangement according to any of the preceding claims,
wherein the controller comprises:
- an analog basic control unit (60, 61, 63) to open the mechanical switch in case of excessive or reverse current and/or voltage in the connecting line or reverse connection of the solar module, and
- an advanced digital control unit (90) comprising a microcontroller to provide advanced control characteristics
wherein the advanced digital control unit (90) is preferably adapted
- to provide a status signal signalizing at least one of the operational characteristics of the solar module or the string of solar modules,
- to provide at least one programmable voltage or current limit,
- to open the mechanical switch if the voltage output of the string is below or above the at least one programmable voltage or current limit,
- to open the mechanical switch during night time,
- to open the mechanical switch in case of certain weather conditions like thunderstorm, and/or
- to provide the theft control.

5. Circuit arrangement according to any of the preceding claims,
**characterized by** a dc-insulating device (40, 41) coupled to the controller (61, 63) to transfer the data from the controller to a central power and data management control (90) and/or a controller of another string.

6. Circuit arrangement according to any of the preceding claims,
wherein the controller is connected via a common data bus (91) to a central power and data management control and or to other controllers of a solar generator, the common data bus preferably comprising a first set of lines for data transfer, at least one second line for direct transfer of predetermined signals of primary relevance like a signal for opening of all mechanical switches or a signal for signalizing an alarm status.

7. Circuit arrangement according to the preceding claim,
wherein the at least one second line is directly connected to the controller (60, 61) to directly effect an actuation of the mechanical switches or to directly receive an alarm signal from the controller.

8. Photovoltaic power supply arrangement comprising
- a plurality of strings (610, 620, 630),
- each of the strings comprising a number of solar modules connected in series
- the strings connected in parallel via a common bus bar connected to an inverter, **characterized in that** each of the strings comprises a circuit arrangement (640) according to any of the preceding claims.

9. Photovoltaic power supply arrangement according to claim 8,
**characterized in that** a single central power and data management control is provided to control a plurality of strings.

10. Photovoltaic power supply arrangement according to claim 8 or 9,
further comprising a common overvoltage and lightning protection (95) arranged between the common bus bar (20) and the inverter.

11. Photovoltaic power supply arrangement according to any of the claim 8-10,
further comprising a semiconductor switch (80) arranged to shortcut the two lines of common bus bar and a control device adapted to close the semiconductor switch for the time period of opening or closing of the mechanical switch.

12. Photovoltaic power supply arrangement according to the preceding claim, **characterized in that** the data is provided via a dc-insulating device.

13. Use of a circuit arrangement according to one of the preceding claims 1 - 7 for controlling the current flow of a string.

14. Use of a circuit arrangement according to one of the preceding claims 1 - 7 for a theft control of a string.

15. Method for providing a theft protection of a string, comprising the steps:
- measuring the voltage across the string and/or the current flowing in at least one of the connecting lines of the string,
- providing the measured voltage and/or current to a controller,
- comparing this voltage and/or current with a predetermined value and/or a previous value in a controller,
- outputting a theft alarm signal from the controller if the change of the voltage and/or the current is greater than a predetermined magnitude of change,
**characterized by**
- sending a pulsed signal to one of the connecting lines of the string,
- measuring the resistance of the string based on this signal,
- comparing the measured resistance with a predetermined resistance value and/or a previously measured value in the controller, and
- outputting a theft alarm signal from the controller if the difference between the measured resistance and the predetermined resistance value and/or the previously measured value is greater than a predetermined magnitude of change.

## Patentansprüche

1. Elektrische Schaltungsanordnung zur Steuerung der Leistungsabgabe von mindestens einer ersten Kette (10), die das Folgende umfasst:
- einen ersten mechanischen Schalter (30, 31; 32), zur selektiven Unterbrechung von einer (11) der Verbindungsleitungen (11, 12) der ersten Kette,
- eine Messvorrichtung (100-190; 200-230) zur Messung der Spannung an der ersten Kette und/oder des durch die erste Kette fließenden Stroms, und
- eine Steuereinrichtung (60, 61, 63), die ein Signal von der Messvorrichtung empfängt und den ersten mechanischen Schalter steuert,
wobei die Steuereinrichtung eingerichtet ist, den ersten mechanischen Schalter zu öffnen, wenn die Spannung und/oder der Strom nicht innerhalb eines vorgegebenen Bereichs liegt,
**dadurch gekennzeichnet, dass** die Steuereinrichtung (60) eingerichtet ist, eine Diebstahlkontrolle für eine Kette bereitzustellen, die mit der Schaltungsanordnung verbunden ist, wobei die Diebstahlkontrolle aufweist:
- eine Steuereinheit zur Messung des Stroms, der durch mindestens eine der Verbindungsleitungen fließt, wenn sich der mechanische Schalter in der geschlossenen Position befindet,
- eine Logikeinheit, die eine plötzliche Änderung dieses Stroms erkennt und ein Signal an eine Alarmeinheit ausgibt, um die Trennung der Kette oder eines einzelnen Solarmoduls der Kette zu signalisieren,
- einen Impulsgenerator (70), der mit den Verbindungsleitungen gekoppelt ist, um Prüfimpulse in die Verbindungsleitungen zu senden,
- eine Messeinheit, die eingerichtet ist, den Widerstand der Kette während eines Prüfimpulses zu messen, und
wobei die Logikeinheit eingerichtet ist, eine Änderung dieses Widerstands zu erkennen und ein Alarmsignal an eine Alarmeinheit auszugeben, um die Trennung der Kette oder eines einzelnen Solarmoduls zu signalisieren.

2. Schaltungsanordnung nach Anspruch 1,
die ferner einen zweiten mechanischen Schalter (32) in der anderen (12) der Verbindungsleitungen der ersten Kette aufweist, wobei die Steuereinrichtung eingerichtet ist, sequentiell den ersten (31) und zweiten (32) mechanischen Schalter für ein kurzes Zeitintervall verschoben zu betätigen, um die Spitzenleistung zu reduzieren.

3. Schaltungsanordnung nach einem der vorhergehenden Ansprüche,
wobei die Messvorrichtung (110) eingerichtet ist, die abgegebene Spannung der elektrischen Schaltung zu messen, die die Kette und den mechanischen Schalter umfasst.

4. Schaltungsanordnung nach einem der vorhergehenden Ansprüche,
wobei die Steuereinrichtung aufweist:
- eine analoge Basissteuereinheit (60, 61, 63) zur Öffnung des mechanischen Schalters im Fall eines übermäßigen oder umgekehrten Stroms und/oder einer übermäßigen oder umgekehrten Spannung in der Verbindungsleitung oder einer umgekehrten Verbindung des Solarmoduls, und
- eine weiterentwickelte digitale Steuereinheit (90), die einen Mikrocontroller aufweist, um weiterentwickelte Steuereigenschaften bereitzustellen,
wobei die weiterentwickelte digitale Steuereinheit (90) vorzugsweise eingerichtet ist:
- ein Statussignal bereitzustellen, das mindestens eine der Betriebseigenschaften des Solarmoduls oder der Kette der Solarmodule signalisiert,
- mindestens eine programmierbare Spannungs- oder Strombegrenzung bereitzustellen,
- den mechanischen Schalter zu öffnen, wenn die Spannungsabgabe der Kette unter oder über der mindestens einen programmierbaren Spannungs- oder Strombegrenzung liegt,
- den mechanischen Schalter in der Nacht zu öffnen,
- den mechanischen Schalter im Fall bestimmter Wetterbedingungen wie einem Gewitter zu öffnen, und/oder
- die Diebstahlkontrolle bereitzustellen.

5. Schaltungsanordnung nach einem der vorhergehenden Ansprüche,
**gekennzeichnet durch** eine Gleichspannungsisolationsvorrichtung (40, 41), die mit der Steuereinrichtung (61, 63) gekoppelt ist, um die Daten von der Steuereinrichtung zu einer zentralen Leistungs- und Datenverwaltungssteuerung (90) und/oder einer Steuereinrichtung einer anderen Kette zu übertragen.

6. Schaltungsanordnung nach einem der vorhergehenden Ansprüche,
wobei die Steuereinrichtung über einen gemeinsamen Datenbus (91) mit einer zentralen Leistungs- und Datenverwaltungssteuerung und oder anderen Steuereinrichtungen eines Solargenerators verbunden ist,
wobei der gemeinsame Datenbus vorzugsweise eine ersten Satz von Leitungen zur Datenübertragung und mindestens eine zweite Leitung zur direkten Übertragung von vorgegebenen Signalen mit einer Hauptrelevanz wie einem Signal zum Öffnen aller mechanischen Schalter oder eines Signals zum Signalisieren eines Alarmzustands aufweist.

7. Schaltungsanordnung nach dem vorhergehenden Anspruch,
wobei die mindestens eine zweite Leitung direkt mit der Steuereinrichtung (60, 61) verbunden ist, um eine direkte Betätigung der mechanischen Schalter durchzuführen oder direkt ein Alarmsignal von der Steuereinrichtung zu empfangen.

8. Photovoltaische Stromversorgungsanordnung, die Folgendes umfasst
- eine Vielzahl von Ketten (610, 620, 630),
- wobei jede der Ketten eine Anzahl von Solarmodulen aufweist, die in Reihe geschaltet sind,
- die Ketten über eine gemeinsame Sammelschiene bus bar ? parallel geschaltet sind, die mit einem Wech- bus-Schiene ? selrichter verbunden ist,
**dadurch gekennzeichnet, dass** jede der Ketten eine Schaltungsanordnung (640) nach einem der vorhergehenden Ansprüche aufweist.

9. Photovoltaische Stromversorgungsanordnung nach Anspruch 8,
**dadurch gekennzeichnet, dass** eine einzelne zentrale Leistungs- und Datenverwaltungssteuerung vorgesehen ist, um eine Vielzahl von Ketten zu steuern.

10. Photovoltaische Stromversorgungsanordnung nach Anspruch 8 oder 9, die ferner einen gemeinsamen Überspannungs- und Blitzschutz (95) aufweist, der zwischen der gemeinsamen Sammelschiene (20) und dem Wechselrichter angeordnet ist.

11. Photovoltaische Stromversorgungsanordnung nach einem der Ansprüche 8 bis 10,
die ferner einen Halbleiterschalter (80), der eingerichtet ist, die beiden Leitungen der gemeinsamen Sammelschiene kurzzuschließen, und eine Steuervorrichtung aufweist, die eingerichtet ist, den Halbleiterschalter während der Zeitspanne des Öffnens oder Schließens des mechanischen Schalters zu schließen.

12. Photovoltaische Stromversorgungsanordnung nach dem vorhergehenden Anspruch, **dadurch gekennzeichnet, dass** die Daten über eine Gleichspannungsisolationsvorrichtung bereitgestellt werden.

13. Verwendung einer Schaltungsanordnung nach einem der vorhergehenden Ansprüche 1 bis 7 zur Steuerung des Stromflusses einer Kette.

14. Verwendung einer Schaltungsanordnung nach einem der vorhergehenden Ansprüche 1 bis 7 für eine Diebstahlkontrolle einer Kette.

15. Verfahren zum Bereitstellen eines Diebstahlschutzes einer Kette, das die folgenden Schritte aufweist:
- Messen der Spannung an der Kette und/oder des Stroms, der in mindestens einer der Verbindungsleitungen der Kette fließt,
- Bereitstellen der gemessenen Spannung und/oder des gemessenen Stroms einer Steuereinrichtung,
- Vergleichen dieser Spannung und/oder dieses Stroms mit einem vorgegebenen Wert und/oder einem vorhergehenden Wert in einer Steuereinrichtung,
- Ausgeben eines Diebstahlalarmsignals aus der Steuereinrichtung, wenn die Änderung der Spannung und/oder des Stroms größer als eine vorgegebene Änderungsgröße ist,
**gekennzeichnet durch**
- Senden eines gepulsten Signals an eine der Verbindungsleitungen der Kette,
- Messen des Widerstands der Kette beruhend auf diesem Signal,
- Vergleichen des gemessenen Widerstands mit einem vorgegebenen Widerstandswert und/oder einem vorhergehend gemessenen Wert in der Steuereinrichtung, und
- Ausgeben eines Diebstahlalarmsignals aus der Steuereinrichtung, wenn die Differenz zwischen dem gemessenen Widerstand und dem vorgegebenen Widerstandswert und/oder dem vorhergehend gemessenen Wert größer als eine vorgegebene Änderungsgröße ist.

## Revendications

1. Système de circuit électrique pour commander la sortie d'au moins une première chaîne (10), comprenant :
- un premier commutateur mécanique (30, 31 ; 32) afin d'interrompre sélectivement une (11) des lignes de connexion (11, 12) de la première chaîne ;
- un dispositif de mesure (100-190 ; 200-230) qui va mesurer une tension dans la première chaîne et/ou le courant circulant dans la première chaîne ; et
- une unité de commande (60, 61, 63) qui reçoit un signal du dispositif de mesure et qui commande le premier commutateur mécanique ;
dans lequel l'unité de commande est conçue pour ouvrir le premier commutateur mécanique si la tension et/ou le courant ne sont pas dans une plage prédéterminée ; **caractérisé en ce que** l'unité de commande (60) est conçue pour fournir une commande de vol pour une chaîne connectée au système de circuit, laquelle commande de vol comprend :
- une unité de commande qui va mesurer le courant circulant dans au moins une des lignes de connexion avec le commutateur mécanique en position fermée ;
- une unité logique qui va détecter un changement soudain de ce courant et émettre un signal vers une unité d'alarme pour signaler la déconnexion de la chaîne ou d'un seul module solaire de la chaîne ;
- un générateur d'impulsions (70) couplé aux lignes de connexion afin d'envoyer des impulsions de vérification dans les lignes de connexion ;
- une unité de mesure qui va mesurer la résistance de la chaîne pendant une impulsion de vérification ; et dans lequel l'unité logique est conçue pour détecter un changement de cette résistance et émettre un signal d'alarme vers une unité d'alarme afin de signaler la déconnexion de la chaîne ou d'un seul module solaire de la chaîne.

2. Système de circuit selon la revendication 1, comprenant en outre un second commutateur mécanique (32) dans l'autre ligne (12) des lignes de connexion de la première chaîne, dans lequel l'unité de commande est conçue pour actionner séquentiellement le premier (31) et le second (32) commutateur mécanique décalés pour un court intervalle de temps afin de réduire la puissance maximale.

3. Système de circuit selon l'une quelconque des revendications précédentes, dans lequel le dispositif de mesure (110) est conçu pour mesurer la tension de sortie du circuit électrique comprenant la chaîne et le commutateur mécanique.

4. Système de circuit selon l'une quelconque des revendications précédentes, dans lequel l'unité de commande comprend :
- une unité de commande de base analogique (60, 61, 63) pour ouvrir le commutateur mécanique en cas de courant et/ou de tension excessifs ou inverses dans la ligne de connexion ou de connexion inverse du module solaire ; et
- une unité de commande numérique avancée (90) comprenant une micro-unité de commande afin de fournir des caractéristiques de commande avancées ;
dans lequel l'unité de commande numérique avancée (90) est de préférence conçue pour :
- fournir un signal de statut signalant au moins une des caractéristiques de fonctionnement du module solaire ou de la chaîne de modules solaires ;
- fournir au moins une limite de tension ou de courant programmable ;
- ouvrir le commutateur mécanique si la sortie de tension de la chaîne est inférieure ou supérieure à ladite au moins une limite de tension ou de courant programmable ;
- ouvrir le commutateur mécanique pendant la nuit ;
- ouvrir le commutateur mécanique dans le cas de certaines conditions climatiques comme les orages ; et/ou
- fournir la commande de vol.

5. Système de circuit selon l'une quelconque des revendications précédentes, **caractérisé en ce qu'**un dispositif d'isolation CC (40, 41) est couplé à l'unité de commande (61, 63) afin de transférer les données depuis l'unité de commande vers une commande de gestion de puissance et de données centrale (90) et/ou une unité de commande d'une autre chaîne.

6. Système de circuit selon l'une quelconque des revendications précédentes, dans lequel l'unité de commande est connectée via un bus de données commun (91) à la commande de gestion de puissance et de données centrale ou à d'autres unités de commande d'un générateur solaire, le bus de données commun comprenant de préférence un premier ensemble de lignes pour le transfert de données, au moins une seconde ligne pour le transfert direct de signaux prédéterminés d'une pertinence primaire comme un signal pour ouvrir tous les commutateurs mécaniques ou un signal pour signaler un statut d'alarme.

7. Système de circuit selon la revendication précédente, dans lequel ladite au moins une seconde ligne est connectée directement à l'unité de commande (60, 61) afin d'effectuer directement un actionnement des commutateurs mécaniques ou de recevoir directement un signal d'alarme depuis l'unité de commande.

8. Système d'alimentation électrique photovoltaïque comprenant :
- plusieurs chaînes (610, 620, 630) ;
- chacune des chaînes comprenant un certain nombre de modules solaires connectés en série ;
- les chaînes étant connectées en parallèle via une barre omnibus commune connectée à un onduleur ; **caractérisé en ce que** chacune des chaînes comprend un système de circuit (640) selon l'une quelconque des revendications précédentes.

9. Système d'alimentation électrique photovoltaïque selon la revendication 8, **caractérisé en ce qu'**une commande de gestion de puissance et de données centrale unique est utilisée pour commander plusieurs chaînes.

10. Système d'alimentation électrique photovoltaïque selon la revendication 8 ou 9, comprenant en outre une protection commune contre les surtensions et la foudre (65) disposée entre la barre omnibus commune (20) et l'onduleur.

11. Système d'alimentation électrique photovoltaïque selon l'une quelconque des revendications 8 à 10, comprenant en outre un commutateur à semi-conducteur (80) conçu pour court-circuiter les deux lignes de la barre omnibus commune, et un dispositif de commande conçu pour fermer le commutateur à semi-conducteur pendant la période d'ouverture ou de fermeture du commutateur mécanique.

12. Système d'alimentation électrique photovoltaïque selon la revendication précédente, **caractérisé en ce que** les données sont fournies via un dispositif d'isolation CC.

13. Utilisation d'un système de circuit selon l'une quelconque des revendications précédentes 1 à 7, afin de commander le flux de courant d'une chaîne.

14. Utilisation d'un système de circuit selon l'une quelconque des revendications précédentes 1 à 7, afin de réaliser une commande de vol d'une chaîne.

15. Procédé pour fournir une protection contre le vol d'une chaîne, lequel comprend les étapes consistant à :
- mesurer la tension dans la chaîne et/ou le courant circulant dans au moins une des lignes de connexion de la chaîne ;
- envoyer la tension et/ou le courant mesurés à une unité de commande ;
- comparer cette tension et/ou ce courant à une valeur prédéterminée et/ou une valeur précédente dans une unité de commande ;
- émettre un signal d'alarme de vol depuis l'unité de commande si le changement de tension et/ou de courant dépasse une amplitude de changement prédéterminée ;
**caractérisé en ce qu'**il consiste à :
- envoyer un signal pulsé vers l'une des lignes de connexion de la chaîne ;
- mesurer la résistance de la chaîne en fonction de ce signal ;
- comparer la résistance mesurée à une valeur de résistance prédéterminée et/ou une valeur précédemment mesurée dans l'unité de commande ; et
- émettre un signal d'alarme de vol depuis l'unité de commande si la différence entre la valeur mesurée et la valeur de résistance prédéterminée et/ou la valeur précédemment mesurée est supérieure à une amplitude de changement prédéterminée.
